# EUROPEAN PATENT APPLICATION

(11) **EP 3 118 162 A1**
(43) Date of publication of application: **18.01.2017**
(21) Application number: 15177326.4
(22) Date of filing: 17.07.2015
(51) Int. Cl.: C02F 1/00, B65D 51/28

(54) **LID FOR CLOSING AN APERTURE PROVIDING ACCESS TO A LIQUID RESERVOIR, ASSEMBLY INCLUDING A DEVICE INCLUDING A LIQUID RESERVOIR AND LIQUID TREATMENT SYSTEM**

(71) Applicant: Brita GmbH, 65232 Taunusstein (DE)
(72) Inventor: Hofmann, Uwe, 65321 Heidenrod (DE); Blank, Mario, 59846 Sundern (DE)
(74) Representative: van Lookeren Campagne, Constantijn August

(57) **Abstract**

A lid for closing an aperture providing access to a liquid reservoir includes a seat for receiving a removable module (51). The seat includes a chamber defined by a bottom wall (56) and a side wall (55) and having a mouth forming an aperture on one side of the lid. At least one of the side wall (55) and the bottom wall (56) includes at least a section (61) that is elastically deformable to allow at least a section of the bottom wall (56) to be pressed towards the mouth from an opposite side of the lid to the one on which the aperture is formed.

## Description

The invention relates to a lid for closing an aperture providing access to a liquid reservoir,
including a seat for receiving a removable module,
the seat including a chamber defined by a bottom wall and a side wall and having a mouth forming an aperture on one side of the lid.

The invention also relates to an assembly including a device including a liquid reservoir and an aperture for providing access to the reservoir, and a lid for closing the aperture.

The invention also relates to a liquid treatment system.

WO 2013/105018 A1 discloses a portable water treatment device of the jug type, the mouth of which is removably closable by a lid. A hopper is fitted inside the jug, which defines a first collecting basin for the water to be filtered, which communicates with a second collecting basin for the water filtered through a duct. A filter cartridge is removably housed in the duct. A determining and signalling device of a spent state of the filter cartridge is incorporated in a box-shaped casing or housing that is housed within a seat. In order to hold the determining and signalling device in the seat, the portable water treatment device comprises a pair of magnetic elements that are respectively affixed onto the determining and signalling device and on the lid. In a first embodiment, the magnetic force of attraction can be overcome, thus releasing the determining and signalling device from the seat, when the jug is subjected to at least a pre-determined external stress, such as that obtained by turning the jug upside down and tapping the base of the jug opposite the lid with one's hand or by removing the lid and shaking vigorously. In a second embodiment, the magnetic element is affixed to a projection produced on a wall of the hopper, which defines the basin, in proximity to the lid. In this case, removal of the lid will result in a distancing of the pair of magnetic elements, thus in fact allowing the release of the determining and signalling device from the seat.

A problem of the known lid and seat in the first embodiment is that it is difficult to ensure that the force holding the determining and signalling device in place is strong enough to prevent it from falling out during normal use but not so strong as to make it impossible to remove the device without tools. If the user is unable to shake out the device, it will still need to be prised out of the seat with the aid of a tool or the user's fingernails. In the second embodiment, there is a high risk of loss of the device when the lid is taken off, e.g. to replace the filter cartridge.

It is an object of the invention to provide a lid, assembly and liquid treatment system of the types mentioned above in the opening paragraphs that allow the module to be seated with its exposed surface flush with an edge of the aperture and to be held relatively securely in the chamber, but be removable relatively easily without needing to be prised out of the chamber.

This object is achieved according to a first aspect by the lid according to the invention, which is characterised in that at least one of the side wall and the bottom wall includes at least a section made of flexible material, elastically deformable to allow at least a section of the bottom wall to be pressed into the chamber from an opposite side of the lid to the surface.

The lid is hinged or removable with respect to the receptacle forming or including the reservoir. Thus, the reverse side to the surface in which the aperture is formed is accessible by opening the aperture providing access to the liquid reservoir. By pressing on the bottom wall or a section of the bottom wall, the bottom wall or section thereof is moved towards the mouth. The pressing force is transferred to the bottom of the module to move it with the bottom wall or section of the bottom wall. This force overcomes the force exerted by a holding arrangement with which the lid is provided for holding the module in the seat. The movement of the bottom wall or bottom wall section towards the mouth is sufficient to press the module at least part way out of the chamber, whereupon the user can grab hold of it by its sides, if necessary, to remove it completely from the seat. Because at least one of the side wall and the bottom wall includes at least a section made of flexible material that is elastically deformable, the chamber returns to its original shape to allow the module or a replacement module to be re-inserted. In its inserted position, the module may be a tight fit with respect to the side wall and essentially flush with respect to the surface of the lid. Because at least one of the side wall and the bottom wall includes at least a section made of flexible material that is elastically deformable, it is possible to press the module out of the chamber without having to provide openings for exerting a pressing force directly onto the module. The side wall and bottom wall can close the chamber such that it is only open at the mouth. Liquid cannot therefore pass between the chamber and the reservoir. This prevents contamination of the reservoir. Furthermore, where the reservoir is included in a container like a jug or a carafe, the liquid in the reservoir will not contact the module if the container is upset. This is useful in embodiments for use with modules comprising electronic components.

In an embodiment, the seat, e.g. the side wall, is arranged to hold the module in the seat by direct engagement of the module.

The module may be held by friction and/or a shape-lock between co-operating features of the seat and the module. This is a simple way of keeping the module in place. Moreover, this embodiment can be implemented without further components such as magnets, reducing manufacturing costs and making the lid suitable for use with reservoirs containing potable liquids. Furthermore, it is easier to ensure that a defined holding force is exerted on the module, sufficient to hold the module in nearly all circumstances, but small enough that a user can overcome it by pressing on the bottom wall.

In a variant of this embodiment, the side wall is provided with at least one feature for positive engagement of the module.

The feature forms at least a shape-lock with a corresponding feature or features of the module. The chamber can be relatively shallow if the sidewall is provided with the feature. Furthermore, several such features can be provided along the side wall, e.g. on opposite sides of the chamber, in order to distribute the holding force evenly. Less or no clamping force need be exerted on a side wall of the module. This helps reduce the risk of damage to the module, in particular its contents (e.g. electronic components), when mounted in the seat.

In an embodiment of the lid, the elastically deformable section corresponds to the section of the bottom wall to be pressed towards the mouth of the chamber.

The side wall can thus be relatively rigid. This gives the chamber a well-defined depth, so that it is easier to ensure that the top surface of the module, when inserted, is flush with the edge of the aperture formed by the mouth of the chamber. Moreover, where holding features are provided in or on the side wall, these are at well-defined locations and able to exert sufficient force on the module to keep it in place.

In a variant, the bottom wall includes a relatively rigid substrate provided with an aperture, and the elastically deformable section is included in a layer of elastic material extending across the aperture.

Because the layer of elastic material extends across the aperture, the bottom wall is still closed to prevent passage of liquid. Because the substrate is relatively rigid, it can support the module. The module may, for example, be clamped between the bottom wall and holding features on the chamber side wall to keep it securely in place. The deformable section may fill the aperture or overly it (or both). It may be provided with one or more indications to signal that it is to be pressed. It may be provided with one or more knobs on a side opposite the side exposed to the chamber. It may include a raised section on a side exposed to the chamber. This would cause the deformable section to be pressed slightly out of the chamber through the aperture when the module is in place. There is less tension on the deformable section at the edge of the aperture when it is pressed to push the module out of the chamber in this case.

In a variant of this embodiment, the layer of elastic material extends across a surrounding section of the substrate included in the bottom wall.

This embodiment is easy to implement by covering the entire substrate with a layer of elastic material. It is also ensured that the chamber is closed at the bottom, so that no liquid can pass. Furthermore, there is contact between the substrate and the layer over a larger area, so that the layer adheres better to the substrate.

In a variant of the embodiment in which the bottom wall includes a relatively rigid substrate provided with an aperture, and the elastically deformable section is included in a layer of elastic material extending across the aperture, the substrate is provided with at least one protrusion on a side proximal to the chamber and the at least one protrusion extends at least into the layer of elastic material, e.g. to a surface thereof bordering the chamber.

This helps prevent detachment of the layer of elastic material. It may be adhered or self-adhere to the substrate, so that the shape of the chamber for receiving the module is relatively well-defined. This makes it easier to insert the module such that it is a tight fit. Its top surface will be essentially flush with the edge of the aperture formed by the mouth of the chamber.

In an embodiment, the side wall includes at least a layer of a same material as that from which the elastically deformable section is made.

In this embodiment, gaps between the sides of the module and the side wall of the chamber of the seat for receiving the module can be prevented relatively effectively. Moreover, the side wall may play a more effective role in holding the module, e.g. because the layer of elastic material is slightly compressed and thus clamps the module or because features for forming a shape-lock with one or more co-operating features of the module are deformed and resile when the module is inserted into the chamber.

In an embodiment of the lid, the side wall includes a substrate that is relatively rigid compared to the elastically deformable section.

Thus, the lateral dimensions of the chamber, as well as its depth, are relatively well-defined, since the substrate forms a frame.

In a variant of this embodiment, a layer of elastic material, e.g. a layer of a same material as that from which the elastically deformable section is made, covers the substrate on a side proximal to the chamber.

This combines the effects of defining the dimensions of the chamber and limiting its deformability whilst also preventing gaps between the module and the chamber side wall and providing for more effective engagement between the side wall and the module to hold the latter in place.

An embodiment of the lid is obtainable by overmoulding a relatively rigid substrate forming a frame of the lid with a layer of relatively elastic material.

This is a relatively efficient way of manufacturing the lid such as to have good shape-stability but also be provided with the deformable section for removing the module. The relatively elastic material will generally be softer than the material of the substrate so that it may be used to give the exterior of the lid a pleasant feel. Moreover, its effectiveness in closing the aperture can be increased in that the layer of elastic material comprises a sealing part of the lid for engaging the device including the reservoir. The materials of the substrate and the layer of relatively elastic material may be plastics. The relatively elastic material may be an elastomer, e.g. TPE (a thermoplastic elastomer), TPU (thermoplastic polyurethane) or silicone rubber. The material of the substrate may be polypropylene or another thermoplastic material. Compared to manufacturing the entire lid out of an elastomer, this embodiment can largely dispense with strengthening structures.

In an embodiment, the lid is separable from the reservoir.

The lid is thus hingeless, making manufacture of it and the device including the reservoir simpler. Furthermore, the side of the lid opposite the side to which the mouth of the chamber for receiving the module faces is more easily accessible. It is thus easier for the user to press the module out of its seat.

In an embodiment of the lid, the lid is arranged to close an aperture having an elongated shape.

The reservoir itself may also have an elongated shape, with the aperture providing access to it being relatively large. This is useful where the reservoir is comprised in a jug, for example.

In an embodiment of the lid, the lid includes a cover section for extending across the aperture providing access to the liquid reservoir past an edge thereof, and the lid includes a depending section for engaging a device including the liquid reservoir along a circumference of the depending section, wherein the side on which the mouth of the seat forms an aperture is a side of the cover section opposite a side from which the depending section depends.

The depending section may envelop a socket or plug the aperture providing access to the reservoir. The mouth of the chamber for receiving the module will in either case be exposed, so that the module may, for example, be an electronic module including a display device.

In a variant of this embodiment, the depending section has an exterior surface for engaging an interior surface of the reservoir, and the cover section forms a lateral overhang with respect to the depending section.

This variant seals the aperture providing access to the reservoir relatively well. The depending section engages the interior surface of the reservoir in the manner of a plug. The lateral overhang covers the interface between the depending section and the interior surface of the reservoir.

In a variant of this embodiment, the lateral overhang protrudes further with respect to the depending section at at least one position around a circumference of the lid than along a majority of the circumference of the lid.

At this or these locations, the lateral overhang plays a role in facilitating removal of the lid. Elsewhere, the width of the lid is not unnecessarily increased.

In a variant of this embodiment, in which the lid is arranged to close an aperture having an elongated shape, the lateral overhang protrudes further at at least a longitudinal end of the lid.

This spacing allows the lid to be removed by "peeling" it off the device comprising the reservoir. The lateral overhang provides a fulcrum at the longitudinal end of the lid that is relatively far removed from the edge of the aperture closed by the lid. This helps prevent the lid from falling into the reservoir when it is removed. Because the fulcrum point is at the longitudinal end, a relatively long lever arm is available for removing the lid.

In a variant of the embodiment in which the lateral overhang protrudes further with respect to the depending section at at least one position around a circumference of the lid than along a majority of the circumference of the lid, a section of the lateral overhang forms a lip for removing the lid from the liquid reservoir.

The lip may extend past an edge of the surface in which the aperture providing access to the reservoir is provided. The lip can be pressed on the side facing in the same direction as the depending section of the lid, because this side of the lip is exposed. Where the lid is arranged to close an aperture having an elongated shape, the lip may be positioned and dimensioned to lengthen the cover section in longitudinal direction. In an embodiment, the lip is offset with respect to a plane through a centre of a shape defined by the depending section (and thus a centre of the aperture when the lid is in place). This could be useful where the lid is for closing a reservoir in a jug and the lip is intended to be pushed by the thumb of the user as the user holds the jug.

In a variant of the embodiment of the lid in which the lid includes a cover section for extending across the aperture providing access to the liquid reservoir past an edge thereof, the lid includes a depending section for engaging a device including the liquid reservoir along a circumference of the depending section, and the side on which the mouth of the seat forms an aperture is a side of the cover section opposite a side from which the depending section depends, the lid includes at least one of:
at least one slot through at least a section of the depending section; and
at least one groove in surface of the depending section for engaging a surface of the device including the liquid reservoir.

The groove and/or slot allow for ventilation of the reservoir as it empties. This is of especial use where the reservoir is part of a funnel or hopper that should empty itself with the lid on. There is no need to provide a pumping device.

In a variant of the embodiment of the lid in which the lid includes a cover section for extending across the aperture providing access to the liquid reservoir past an edge thereof, the lid includes a depending section for engaging a device including the liquid reservoir along a circumference of the depending section, and the side on which the mouth of the seat forms an aperture is a side of the cover section opposite a side from which the depending section depends, the depending section includes a relatively rigid substrate covered on at least one side by a layer of relatively elastic material, e.g. a layer of the same material as the material of the elastically deformable section.

The depending section is thus strong enough to ensure that the depending section engages the device including the reservoir firmly. The relatively elastic material ensures that the depending section seals against a surface of the device including the reservoir relatively effectively by conforming to the shape of this surface.

In a variant of the embodiment of the lid in which the lid includes a cover section for extending across the aperture providing access to the liquid reservoir past an edge thereof, the lid includes a depending section for engaging a device including the liquid reservoir along a circumference of the depending section, and the side on which the mouth of the seat forms an aperture is a side of the cover section opposite a side from which the depending section depends, the depending section includes a ridge along a circumference of the depending section for engaging the device including the reservoir.

The ridge forms a sealing ridge that can be relatively soft and/or elastic such as to be flattened against a co-operating surface of the device including the reservoir.

In a variant of this embodiment, in which the depending section includes a relatively rigid substrate covered on at least one side by a layer of relatively elastic material, e.g. a layer of the same material as the material of the elastically deformable section, the ridge is integral to the layer of relatively elastic material.

This variant provides relatively effective sealing of the aperture providing access to the reservoir.

An embodiment of the lid further includes the removable module.

The module may be a module having a different lifetime from the lid, e.g. because it includes a battery or moving parts.

In a variant, the module includes at least one electronic component.

The module is shielded from the liquid relatively well, because the chamber for receiving it is closed except for the mouth, which faces away from the reservoir. The module may include a battery for powering it. Because the module can be replaced, it need not necessarily include a battery compartment that is accessible to a user. This makes it easier to provide a water-tight module.

In a variant of the embodiment including the removable module, the module includes a device for determining a used amount of at least one of a treatment capacity and a lifetime of a replaceable liquid treatment device.

The module may be configured to determine a time elapsed since replacement of the liquid treatment device, e.g. as a fraction of the total lifetime. The lifetime may be determined by microbiological considerations or the exhaustion of one or more liquid treatment media included in the liquid treatment device, e.g. an ion exchange resin for reducing the hardness or carbonate hardness of drinking water. The extent to which the medium or media is or are exhausted may be inferred or based on one or more measurements by a device included in the module. For example, the device in the module may include a tilt sensor for inferring the amount of liquid treated by the liquid treatment device where the reservoir is part of an assembly including a container for storing and pouring treated liquid. An embodiment is also conceivable in which electrodes extend through at least one of the bottom wall and the side wall of the chamber for receiving the module, so that the latter can receive a signal from a sensor. The electrodes extend through the wall concerned in a sealed manner, so that liquid can still not pass into the chamber.

In a variant of the embodiment including the module, the module includes at least one of an input device and a device for providing an output perceptible by a user, e.g. a screen.

With the module seat as defined above, one side of the module can remain exposed, whilst the remainder is shielded from the liquid in the reservoir. The input device and device or providing an output perceptible by a user, e.g. a visible output, can be on the side that is exposed, in use.

In a variant of the embodiment including the module, the module and the side wall of the chamber are provided with co-operating features for forming a shape-lock to hold the module in the seat.

The shape-lock is more secure than if the module were to be held only by friction.

In a variant of this embodiment, the module is provided with latches, e.g. latches with angled surface sections facing partly in a direction of insertion of the module, for engaging respective edges defined on the side wall of the chamber.

At least one of the latches and the features providing the edges deforms slightly when the module is inserted, so that the protrusions can snap in place behind the edges. Where the latches are provided with angled surfaces facing partly in a direction of insertion of the module, insertion is easier.

In an embodiment of the lid including the module, the module has a height corresponding essentially to a depth of the chamber.

That is to say that a top surface of the module is essentially flush with an edge of the aperture when the module is inserted into the module seat. This gives a smooth appearance and makes it difficult to dislodge the module other than by pressing the bottom wall or section thereof.

In an embodiment of the lid including the module, at least a perimeter of the module is symmetric with respect to a plane of symmetry parallel to a direction of insertion of the module, and the perimeter is asymmetric with respect to a plane perpendicular to the plane of symmetry and parallel to the direction of insertion of the module.

This ensures that the module can be inserted into the module seat with only one orientation. In particular where it is provided with a display screen, the screen will be oriented correctly.

In an embodiment of the lid, including the module, the side wall and a side wall of the module are provided with respective members of at least one pair of at least one tongue and associated groove for receiving the at least one tongue.

This embodiment ensures that the module is aligned on insertion to prevent its being placed in a skewed position in the chamber. By offsetting the tongues and grooves with respect to planes parallel to the direction of insertion and through a centre of the module and through a centre of the chamber, respectively, a degree of asymmetry can be created. This is a way of implementing the embodiment in which the correct orientation of the module is ensured. The module can otherwise have a regular shape, e.g. a rectangular cross-section.

According to another aspect, the assembly according to the invention includes a device including a liquid reservoir and an aperture for providing access to the reservoir, as well as a lid according to the invention.

An embodiment of the assembly includes a lid including a cover section for extending across the aperture providing access to the liquid reservoir past an edge thereof, wherein the lid includes a depending section for engaging a device including the liquid reservoir along a circumference of the depending section, wherein the side on which the mouth of the seat forms an aperture is a side of the cover section opposite a side from which the depending section depends, wherein the depending section has an exterior surface for engaging an interior surface of the reservoir, and wherein the cover section forms a lateral overhang with respect to the depending section, wherein the device includes an edge section surrounding the aperture providing access to the liquid reservoir, and wherein the edge section of the device includes a recessed part adjacent the aperture for receiving a section of the cover section extending past the edge of the aperture.

In this embodiment, the lid plugs the aperture providing access to the reservoir and is relatively unlikely to be dislodged accidentally. The edge of the cover section is situated in the recessed part.

In a variant of this embodiment, the cover section of the lid includes a lip, arranged to protrude laterally from the device including the liquid reservoir.

The lip allows the lid to be removed, despite the fact that it sinks into the device including the reservoir.

In a particular variant hereof, the recessed part includes a section extending to an edge of the device to accommodate a section of the lip proximal to the depending section of the lid.

In a variant of the embodiment that includes a lid including a cover section for extending across the aperture providing access to the liquid reservoir past an edge thereof, wherein the lid includes a depending section for engaging a device including the liquid reservoir along a circumference of the depending section, wherein the side on which the mouth of the seat forms an aperture is a side of the cover section opposite a side from which the depending section depends, wherein the depending section has an exterior surface for engaging an interior surface of the reservoir, and wherein the cover section forms a lateral overhang with respect to the depending section, the laterally overhanging section of the lid protrudes further with respect to the depending section along a section of the circumference of the lid where it extends no further than a lateral outer edge of the edge section of the device than along a remainder of the circumference of the lid where it extends no further than a lateral outer edge of the edge section of the device.

This allows the lid to be "peeled off" to remove it from the device, but with a reduced risk of its ending up in the reservoir in the process. The fulcrum point for the peeling action is located well away from the edge of the aperture providing access to the reservoir where the laterally overhanging section protrudes further.

In an embodiment of the assembly, at least one of the lid and the reservoir is provided with at least one of a slot and a groove through, respectively in a part otherwise arranged sealingly to engage a part of the other of the lid and the reservoir to close the aperture providing access to the liquid reservoir.

This allows for venting of the reservoir, so that liquid flowing out of the reservoir is replaced by air. This feature is useful in embodiments in which the reservoir is included in a funnel, e.g. a funnel of a gravity-driven liquid treatment system.

An embodiment of the assembly includes a container for storing and dispensing liquid, wherein the device including the liquid reservoir is a separating part for a liquid treatment system, suspendable in the container such as to be supported by the container, and arranged to hold a liquid treatment device for treating liquid passing through an outlet of the reservoir.

The lid thus closes an aperture providing access to a reservoir in the separating part. The separating part in turn may close a mouth opposite a base of the container. With the liquid treatment device in place, liquid passing through the outlet of the reservoir can only reach the part of the interior of the container separated from the reservoir by the separating part via the liquid treatment device, in which the liquid undergoes the treatment, e.g. to remove, replace or supplement components of the liquid.

In a variant of this embodiment, the container is a container for pouring liquid.

The container may be a carafe or jug, for example.

In a variant of the embodiment of the assembly that includes a container for storing and dispensing liquid, wherein the device including the liquid reservoir is a separating part for a liquid treatment system, suspendable in the container such as to be supported by the container, and arranged to hold a liquid treatment device for treating liquid passing through an outlet of the reservoir, the separating part includes a section forming an upper section when the separating part is supported by the container and a section depending from the upper section, wherein the separating part is pivotable from a first position to a second position by pressing a section of the upper section towards the container whilst the separating part is supported by the container, and wherein the separating part allows liquid to be poured from the container on a side of the container opposite a side on which the section of the upper section is arranged only in the second of the first and second positions.

The separating part is thus pivotable to allow liquid to be poured from the container or to close the mouth of the container. The lid is pivotable with the separating part. The separating part includes an, in use, upper section. The upper section is placeable on a rim of the container or a ledge just below the upper edge of the rim, by which the separating part is then supported. The upper section may be defined by an edge section surrounding the aperture of the reservoir closable by the lid.

In a variant of this embodiment, the depending section of the separating part includes a part sealing against an interior side of a wall of the container along at least a majority of the circumference of the depending section of the separating part in the first position.

The sealing part may seal against the interior side of the wall of the container along the entire length of the circumference of the depending section or along only part of the circumference. It will do so in any case on the side opposite the side on which the section to be pressed towards the container is situated in use. This side will be the side opposite the side on which liquid is poured from the container, e.g. opposite a side on which a spout is provided, if present. The section to be pressed towards the container will thus be on the same side of the container as the hand of the user when it holds the container, in use.

In a particular variant hereof, the depending section of the separating part is formed with a ridge extending around at least part of its circumference, of which at least a section forms the sealing part.

The ridge contacts an interior surface of a side wall of the container to form a seal along at least part of its length. If there is a spout on the container, the seal may be formed between the level of the spout and a base of the container. Apart from the ridge, the separating part can be spaced apart from the interior surface of the container wall, providing space for movement of the separating part between the first and second positions and allowing liquid poured from the container to flow between the container side wall and the separating part. Generally, the ridge will extend around the complete circumference of the depending section of the separating part, even if it does not contact the interior surface of the wall of the container to form a seal along its entire length.

In a particular variant, the ridge is spaced apart from an interior surface of the container wall in at least the second position at a location on a same side of the container as an end of the section to be pressed towards the container.

This provides for air to enter the part of the container for receiving treated liquid during pouring. A smooth flow of liquid is thus obtained. Because the location is at the same side as an end of the section to be pressed towards the container, it is on the opposite side to the side from which liquid is poured.

In an embodiment of the variant in which the depending section of the separating part is formed with a ridge extending around at least part of its circumference, of which at least a section forms the sealing part, the container has a base and a mouth opposite the base, and the container is provided with at least one protruding part on the interior surface of the container wall, each associated with a respective section of the ridge on the depending section of the separating part arranged to snap into a position between the protruding part and the base when the separating part pivots from the second to the first position.

The section of the ridge assumes a position between the base and the associated protruding part in only the first of the first and second positions. The at least one protruding part protrudes far enough to engage the ridge on the separating part as the latter pivots between the first and second positions. It may in particular remain in engagement in the first position. The at least one protruding part thus holds the separating part in the first position to close the container on at least the side from which liquid is poured, e.g. the same side as the spout, if present. The protruding part may be located below the spout and/or adjacent the spout, e.g. at a level of a lower end of the spout or between the spout and the base. If there are several protruding parts, then they may be arranged symmetrically with respect to a plane through a centre of the container and perpendicular to the pivot axis. The at least one protruding part provides noticeable feedback to a user to signal that the first position has been reached.

In another embodiment of the variant in which the depending section of the separating part is formed with a ridge extending around at least part of its circumference, of which at least a section forms the sealing part, the container has a base and a mouth opposite the base, and the container is provided with at least one protruding part on the interior surface of the container wall, each associated with a respective section of the ridge on the depending section of the separating part arranged to snap into a position between the protruding part and the base when the separating part pivots from the first to the second position.

The section of the ridge assumes a position between the base and the associated protruding part in only the second of the first and second positions. The at least one protruding part protrudes far enough to engage the ridge on the separating part as the latter pivots between the first and second positions. It may in particular remain in engagement in the second position. The at least one protruding part thus holds the separating part in the second position. The at least one protruding part will generally be located on a same side of the separating part as the section of the upper section of the separating part to be pressed towards the container. If there are several protruding parts, then they may be arranged symmetrically with respect to a plane through a centre of the container and perpendicular to the pivot axis. The at least one protruding part provides noticeable feedback to a user to signal that the second position has been reached.

In an embodiment of the assembly including a container for storing and dispensing liquid, wherein the device including the liquid reservoir is a separating part for a liquid treatment system, suspendable in the container such as to be supported by the container, and arranged to hold a liquid treatment device for treating liquid passing through an outlet of the reservoir, wherein the separating part includes a section forming an upper section when the separating part is supported by the container and a section depending from the upper section, wherein the separating part is pivotable from a first position to a second position by pressing a section of the upper section towards the container whilst the separating part is supported by the container, and wherein the separating part allows liquid to be poured from the container on a side of the container opposite a side on which the section of the upper section is arranged only in the second of the first and second positions, a side wall of the depending section of the separating part is provided with a lug at a location on a same side as a lateral end of the section to be pressed towards the container.

The lug serves to retain the separating part in the second position. The user need not hold down the separating part with quite so much force whilst pouring liquid from the container. At least one of the separating part and the container deforms to provide an elastic force countering the force exerted on the separating part via the lug. The separating part is thus held in position between opposite sides of a side wall of the container.

In an embodiment of the assembly including a container for storing and dispensing liquid, wherein the device including the liquid reservoir is a separating part for a liquid treatment system, suspendable in the container such as to be supported by the container, and arranged to hold a liquid treatment device for treating liquid passing through an outlet of the reservoir, wherein the separating part includes a section forming an upper section when the separating part is supported by the container and a section depending from the upper section, wherein the separating part is pivotable from a first position to a second position by pressing a section of the upper section towards the container whilst the separating part is supported by the container, and wherein the separating part allows liquid to be poured from the container on a side of the container opposite a side on which the section of the upper section is arranged only in the second of the first and second positions, the container includes a mouth surrounded by a rim, wherein at least a further section of the upper section includes at least one edge section placeable on at least a section of the rim to support the separating part in at least the first position.

The rim of the container thus supports the separating part by the edge section in at least the first position. There is no need to provide a separate ledge or other support mechanism for suspending the separating part in the container in a manner that allows it to pivot. Moreover, the pivoting motion can be combined with displacement along the rim relatively easily. The edge section will generally form an overhanging section that protrudes with respect to the depending section of the separating part. The depending section can thus be inserted through the mouth of the container. The overhanging section has a surface facing the rim for supporting the separating part.

In a variant of this embodiment, the section of the upper section for pressing towards the container is inclined with respect to the further section, and at least a cover section of the lid includes a first section and a second section, the second section having a corresponding inclination with respect to the first section.

This variant allows the use of a container with a rim that lies essentially in one plane. The rim need not include a downwardly inclined section beneath the section of the upper section of the separating part to be pressed towards the container. The section for pressing towards the container may include at least one further section of the edge section. The lid conforms in shape to the upper section of the separating part.

In a variant of the embodiment including a container for storing and dispensing liquid, wherein the device including the liquid reservoir is a separating part for a liquid treatment system, suspendable in the container such as to be supported by the container, and arranged to hold a liquid treatment device for treating liquid passing through an outlet of the reservoir, wherein the separating part includes a section forming an upper section when the separating part is supported by the container and a section depending from the upper section, wherein the separating part is pivotable from a first position to a second position by pressing a section of the upper section towards the container whilst the separating part is supported by the container, wherein the separating part allows liquid to be poured from the container on a side of the container opposite a side on which the section of the upper section is arranged only in the second of the first and second positions, wherein the container includes a mouth surrounded by a rim, and wherein at least a further section of the upper section includes at least one edge section placeable on at least a section of the rim to support the separating part in at least the first position, a transition between the further section and the section of the upper section for pressing towards the container extends across the mouth of the container when the separating part is supported by the container.

Because the transition section extends across the mouth of the container, the pivot axis also does. Assuming that the user presses down the section of the upper section of the separating part towards the container at the rim, e.g. with the thumb of a hand holding the container, there is a relatively long effort arm to the lever formed by the section to be pressed towards the container. This makes it easier to pour liquid from the container, even if there is still liquid to be treated in the reservoir included in the separating part and even through the lid adds to the weight of the separating part.

In a variant of the embodiment that includes a lid that includes a cover section for extending across the aperture providing access to the liquid reservoir past an edge thereof, wherein the lid includes a depending section for engaging a device including the liquid reservoir along a circumference of the depending section, wherein the side on which the mouth of the seat forms an aperture is a side of the cover section opposite a side from which the depending section depends, wherein the depending section has an exterior surface for engaging an interior surface of the reservoir, and wherein the cover section forms a lateral overhang with respect to the depending section, the transition includes curved sections of the edge section of the upper section of the separating part, and the overhanging section of the cover section of the lid includes correspondingly curved sections.

The separating part thus remains supported by the edge section whilst pivoting. If the sections are curved, then the pivot axis can move more easily along the rim. It is also easier to displace the separating part along the rim in addition to causing it to pivot when moving between the first and second positions. The lid conforms in shape to the upper section of the separating part.

In an embodiment of the assembly including a container for storing and dispensing liquid, wherein the device including the liquid reservoir is a separating part for a liquid treatment system, suspendable in the container such as to be supported by the container, and arranged to hold a liquid treatment device for treating liquid passing through an outlet of the reservoir. wherein the separating part includes a section forming an upper section when the separating part is supported by the container and a section depending from the upper section, wherein the separating part is pivotable from a first position to a second position by pressing a section of the upper section towards the container whilst the separating part is supported by the container, and wherein the separating part allows liquid to be poured from the container on a side of the container opposite a side on which the section of the upper section is arranged only in the second of the first and second positions, the container includes a mouth surrounded by a rim, and the upper section includes an edge section extending over the rim along at least a majority, e.g. the entirety, of the circumference of the upper section when the separating part is supported by the container.

The edge section need touch the rim along only part or parts of its length in any one position of the separating part. Regardless of its orientation, the separating part will not drop into the container. Also the edge section helps prevent contaminants from entering the container between the separating part and the container side wall.

In an embodiment of the assembly including a container for storing and dispensing liquid, wherein the device including the liquid reservoir is a separating part for a liquid treatment system, suspendable in the container such as to be supported by the container, and arranged to hold a liquid treatment device for treating liquid passing through an outlet of the reservoir, wherein the separating part includes a section forming an upper section when the separating part is supported by the container and a section depending from the upper section, wherein the separating part is pivotable from a first position to a second position by pressing a section of the upper section towards the container whilst the separating part is supported by the container, and wherein the separating part allows liquid to be poured from the container on a side of the container opposite a side on which the section of the upper section is arranged only in the second of the first and second positions, the container is formed with a spout, and the upper section of the separating part extends to cover a mouth of the spout.

There is thus no need to provide a separate cover to prevent contaminants from entering the spout and being mixed with liquid when it is poured from the container. This makes the assembly suitable for use outdoors and in association with potable liquids, for example.

According to another aspect, the liquid treatment system according to the invention includes an assembly according to the invention and a liquid treatment device.

In an embodiment, the liquid treatment device is a replaceable liquid treatment device.

The replaceable liquid treatment device is held in a seat included in the separating part, ensuring that liquid to be treated is forced to flow through the liquid treatment device. The liquid treatment device may have a limited treatment capacity and/or lifetime, and can be replaced on exhaustion of its capacity or upon reaching the end of its lifetime.

In a variant, the replaceable liquid treatment device includes a replaceable liquid treatment cartridge including a housing, the housing including:
at least one liquid-permeable window forming a liquid inlet;
at least one liquid-permeable window forming a liquid outlet;
at least one treatment chamber, e.g. including a liquid treatment medium, situated between and in liquid communication with the liquid-permeable windows forming the liquid inlet(s) and the liquid outlet(s).

This is one relatively versatile embodiment, in which e.g. cartridges with treatment chambers having different respective contents may be provided. Moreover, the chamber is suitable for holding a bed of granular liquid treatment medium, presenting a relatively large effective area for contacting liquid.

In an embodiment of the liquid treatment system, the liquid treatment device includes a liquid treatment medium for the treatment of liquid in a diffusive process, e.g. by sorption.

For present purposes, the treatment of liquid by sorption includes the treatment of liquid by ion exchange.

In an embodiment of the liquid treatment system, the liquid treatment device includes a porous, liquid-pervious body made of bonded matter, e.g. granular matter.

The body may be included in a replaceable liquid treatment cartridge having a housing of the type described above. It may be the main or even only part of a self-supporting replaceable liquid treatment device. In that case, an impervious housing can be dispensed with. An example is a replaceable liquid treatment device including a porous body made of thermally bonded activated carbon, optionally covered by one or more liquid-permeable webs of fabric.

In a variant hereof, the bonded matter includes at least some of the liquid treatment medium for the treatment of liquid in a diffusive process, e.g. sorption.

The invention will be explained in further detail with reference to the accompanying drawings, in which:
- Fig. 1: is a front plan view of an assembly for forming a liquid treatment system including a container in which a separating part covered by a lid is suspended, with the container made transparent to show the separating part;
- Fig. 2: is a perspective view of the container;
- Fig. 3: is a cross-sectional view of the container showing a spout of the container as seen from the inside of the container;
- Fig. 4: is a further cross-sectional view of the container showing a section of a wall opposite the spout as seen from the inside of the container;
- Fig. 5: is a perspective view of the separating part;
- Fig. 6: is a detailed view of a lug on the separating part;
- Fig. 7: is a plan view of the separating part;
- Fig. 8: is a perspective cross-sectional view of the separating part showing a cartridge seat for receiving a replaceable liquid treatment cartridge;
- Fig. 9: is a cross-sectional view of a suitable replaceable liquid treatment cartridge;
- Fig. 10: is a perspective view of the lid for the separating part;
- Fig. 11: is a top plan view of the lid of Fig. 10;
- Fig. 12: is a bottom view of the lid of Figs. 10 and 11;
- Fig. 13: is a detailed view of a seat in the lid for receiving an electronic module;
- Fig. 14: is a perspective view of the module seat in a cross-section taken along the line A-A in Fig. 11;
- Fig. 15: is a plan view of the module seat in a cross-section taken along the line A-A in Fig. 11;
- Fig. 16: is a plan view of the module seat in a cross-section taken along the line B-B in Fig. 11;

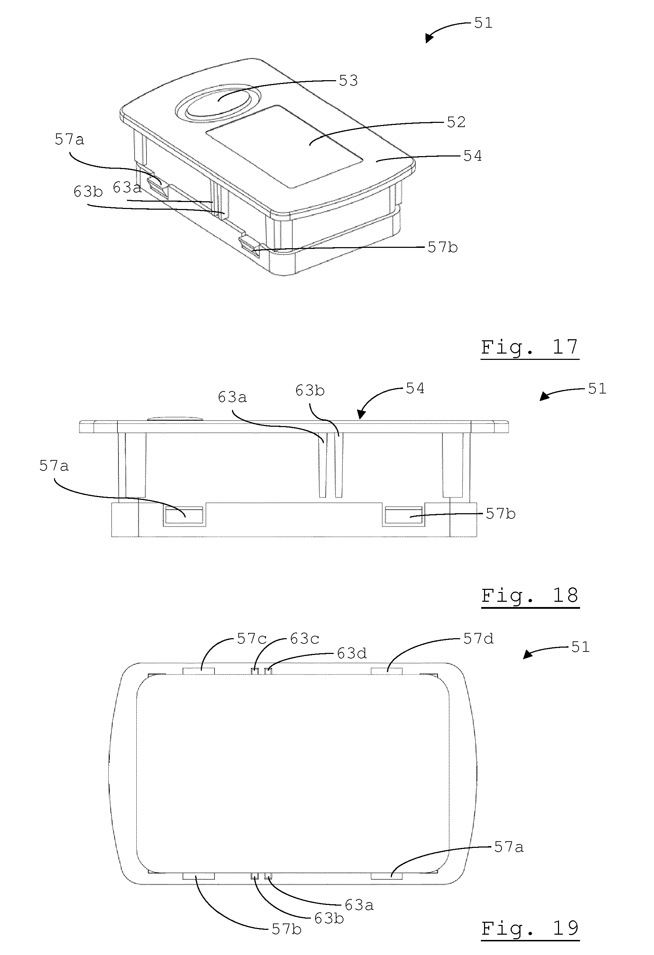

- Fig. 17: is a perspective view of the electronic module;
- Fig. 18: is a side view of the electronic module; and
- Fig. 19: is a bottom view of the electronic module.

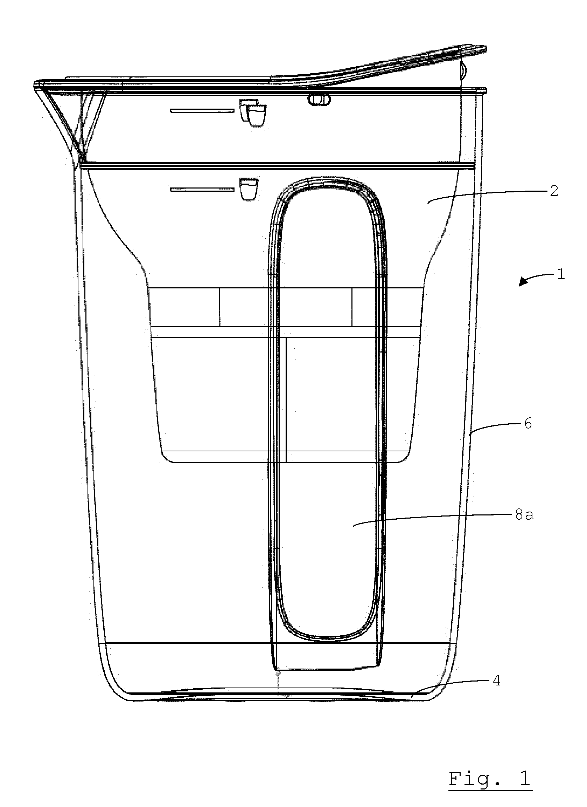

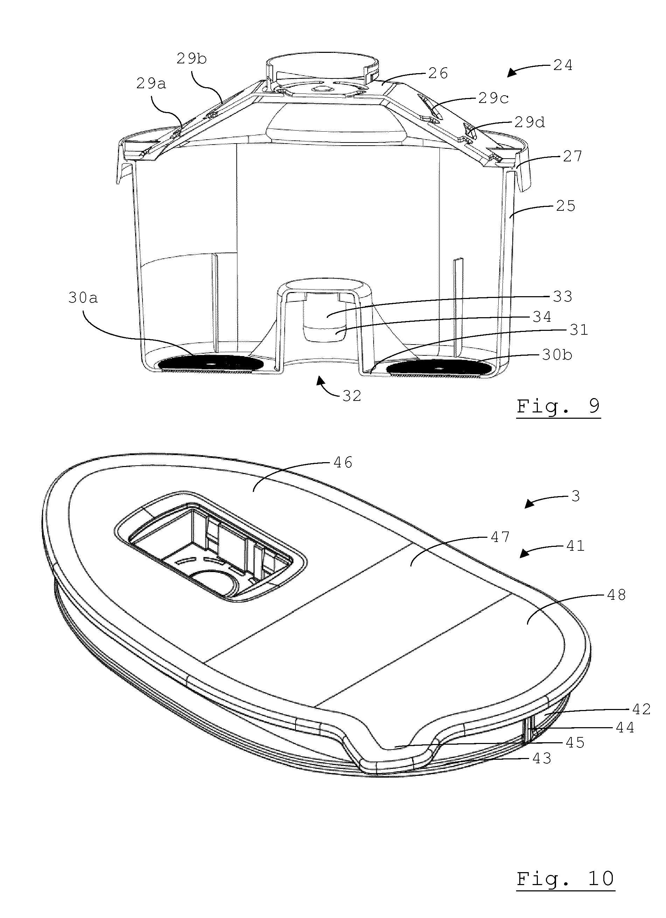

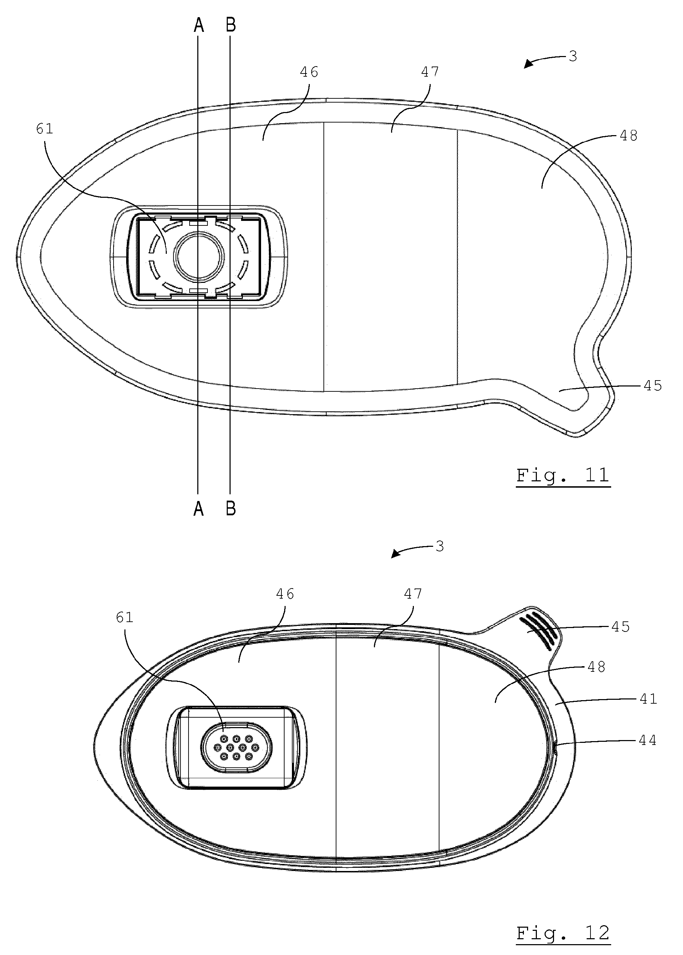

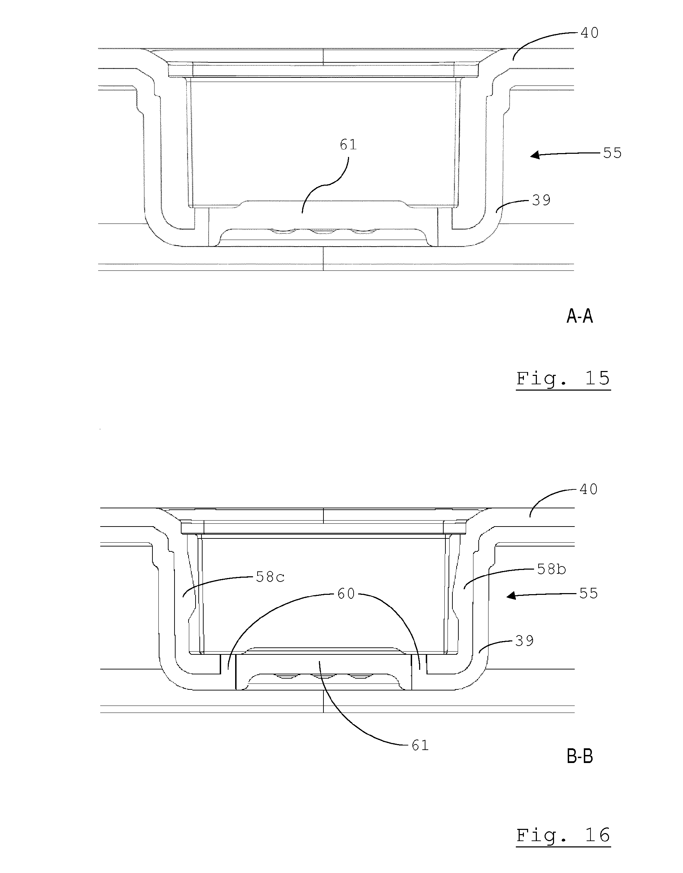

A liquid treatment system includes a container 1 (Figs. 1-4) for receiving and pouring treated liquid, a separating part 2 (Figs. 1, 5-8) and a lid 3 (Figs. 10-16). Here, it will be assumed that the liquid treatment system is a system for treating aqueous liquids such as mains drinking water. The illustrated liquid treatment system is a gravity-driven liquid treatment system.

The container 1 (Figs. 1-4) has a base 4 for placing it onto a supporting surface. It has a mouth surrounded by a rim 5 at an opposite end to the base 4. The rim 5 lies essentially in one plane, so that, seen in plan view from the side, it is essentially straight. A side wall 6 extends from the base 4 to the rim 5. The container 1 is formed with a spout 7. A mouth of the spout 7 is contiguous to the mouth of the container 1 and bordered by a section of the rim 5. The spout 7 takes the form of a lip integral to the side wall 6. An upper edge of this lip is included in the rim 5.

The container 1 has an elongated cross-section transverse to a central upright axis extending from the base to the mouth. The spout 7 is located at one longitudinal end. The container 1 is generally symmetrical with respect to a plane through the upright axis and a longitudinal axis.

The container 1 may be made of plastic, e.g. polypropylene or styrene acrylonitrile (SAN). It is relatively elastic, in that it can be squeezed by a user, at least in the absence of the separating part 2. By contrast, the separating part 2, which may also be made of polypropylene or styrene acrylonitrile, is relatively stiff. This is useful because it includes parts that need to be manufactured within relatively tight tolerance ranges and that should retain their shape. Generally speaking, to prevent wear where the container 1 and the separating part 2 engage each other, they should be made of the same materials.

In the illustrated embodiment, the container 1 has no separate handle. This ensures that the user's hand is relatively close to the body of the container 1, when held in the hand. To provide more purchase on the container 1, the container side wall 6 is provided with sections 8a,b forming indentations on either side. There is therefore no need for a separate handle.

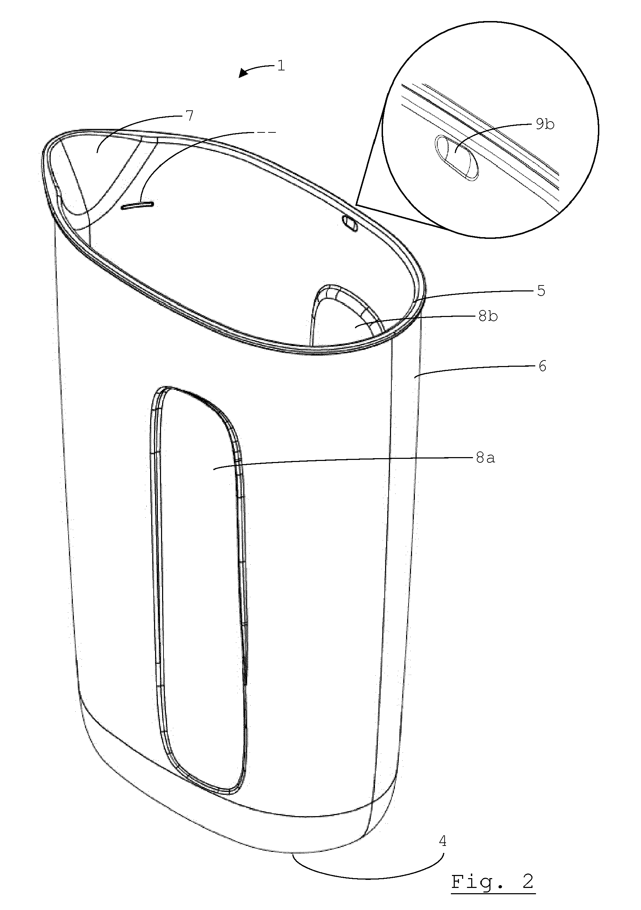

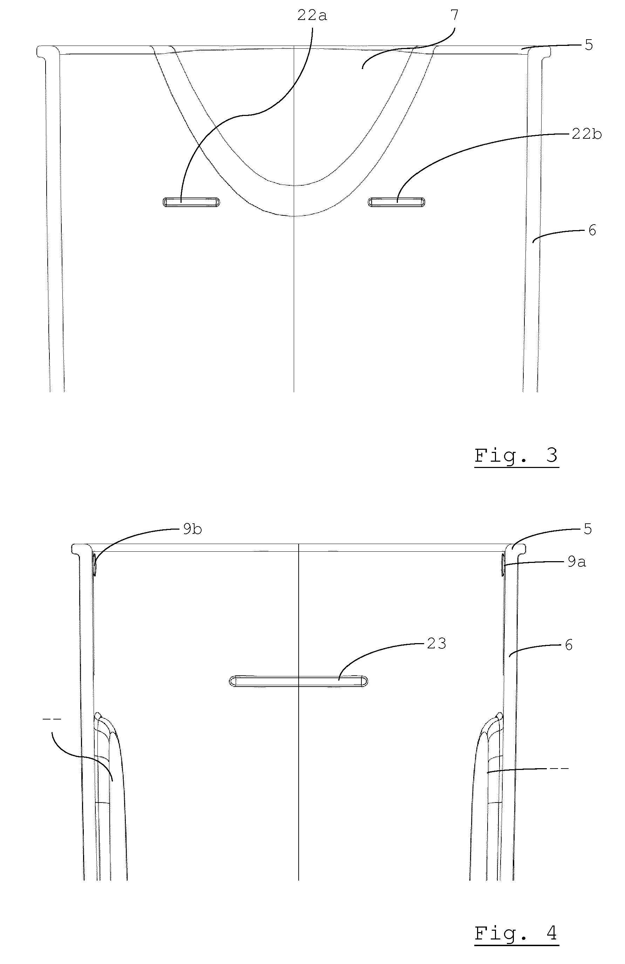

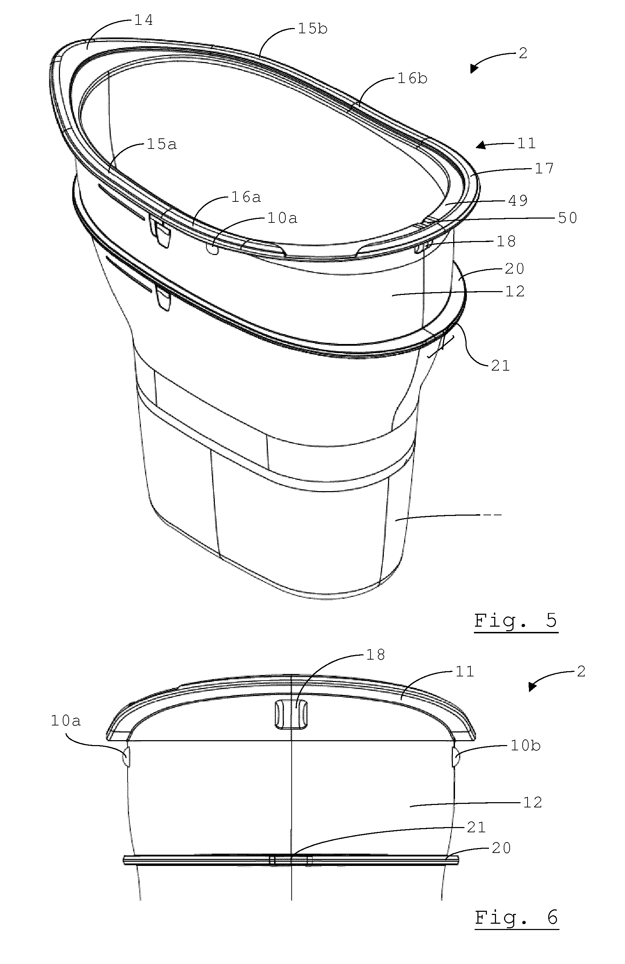

Guide grooves 9a,b (Figs. 2,4) are provided on the interior side of the side wall 6 at a level between the base 4 and the rim 5. The guide grooves 9a,b extend mainly in longitudinal direction but at least their upper edges are oriented at a slight angle to at least a section of the rim 5 at a corresponding location around the circumference of the container 1. These edges are for retaining protrusions 10a,b (Figs. 5-7) provided on an exterior surface of the separating part 2, which protrusions 10a,b are receivable in the guide grooves 9a,b. The relatively flexible nature of the container side wall 6 allows the protrusions 10a,b to be inserted and removed when the separating part 2 is placed in and removed from the mouth of the container 1, respectively. The separating part 2 includes an upper section and a depending section. It is supportable by the container 1 by the upper section. In the illustrated embodiment, the upper section comprises an overhanging edge section 11 that extends over the rim 5. In the illustrated embodiment, this edge section 11 extends along the circumference of the separating part 2. The edge section 11 can be placed on the rim 5 to support the separating part 2. The depending section includes a side wall 12 with respect to which the edge section 11 protrudes and to which it is joined.

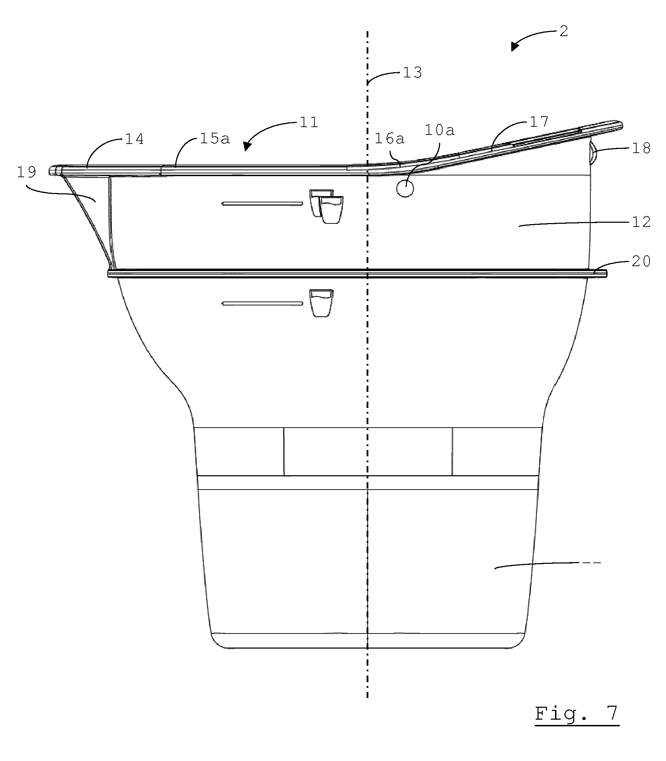

It is possible to define an axis 13 (Fig. 7) of the separating part 2. Like the container 1, the separating part 2 has a generally elongated cross-section perpendicular to the axis 13. The edge section 11 has a section 14 for covering a mouth of the spout 7, opposing sections 15a,b for placement on the rim 5 in a first position of the separating part 2, opposing transition sections 16a,b and a section 17 inclined with respect to the edge sections 15a,b for placement on the rim 5 in the first position. The inclined section 17 has a surface facing the rim 5, in use, that lies essentially in one plane. The inclined section 17 is inclined such that the axial distance between the rim 5 and the surface of the inclined section 17 facing the rim 5 increases away from the sections 15a,b that rest on the rim 5 in the first position. The inclined section 17 can thus be pressed down towards the container 1 onto the rim 5, pivoting the separating part 2 into a second position in which it is also supported by the container 1. The edge section 11 is displaced along the rim 5 in the process, so that the points of contact corresponding to the pivot axis move along the rim 5 in the process. These points of contact also move along the transition sections 16a,b, which are curved. In both the first and the second position, a section of the upper section of the separating part 2 extending between the transition sections 16a,b extends across the mouth of the container 1. Thus, the pivot axis also extends across the mouth, as opposed to being located at the rim 5. The edges of the guide grooves 9 a,b allow the protrusions 10a,b to move whilst preventing that the separating part 2 unintentionally pops upwards out of the container 1 during pivoting.

Because the separating part 2 is relatively rigid compared to the container 1, the container 1, in particular the container side wall 6, may deform elastically to accommodate the separating part 2 in the second position.

A lug 18 (Figs. 5-8) on the side wall 12 presses the separating part 2 towards the spout 7 as the separating part 2 is pivoted into the second position. This lug 18 also holds the separating part 2 clamped in the second position against an opposing elastic force exerted by the container side wall 6.

A web 19 (Fig. 7) extends from the side wall 12 to the section 14 of the edge section 11 covering the mouth of the spout 7 in the first position. This web 19 ensures that the separating part 2 can only be placed with the lug 18 on the opposite side of the container 1 to the side on which the spout 7 is located. It also strengthens the section 14 of the edge section 11 that covers the mouth of the spout 7 in the first position.

The inclined section 17 of the edge section 11 extends over and beyond the rim 5, so that it can also be pressed away from the container 1 in order to release the separating part 2 from the second position. Again, the edges of the guide grooves 9a,b allow the protrusions 10a,b to move whilst preventing that the separating part 2 unintentionally pops up out of the container 1.

A sealing part 20 (Figs. 5-8) in the form of a circumferential ridge on the side wall 12 is arranged to seal against an interior side of the container side wall 6 along at least a majority of its circumference in the first position. This includes at least a section of the sealing part 20 at a level between the base 4 and an end of the spout 7 closest to the base 4. In the illustrated embodiment, the sealing part 20 is integral to the separating part 2. In an alternative embodiment, it may be co-moulded with the remainder of the separating part 2 and made of a more flexible material. In the illustrated embodiment, the ridge is essentially planar in shape. In an alternative embodiment, it may have a more rounded cross-section, being shaped like a bead for example.

An outer edge of the ridge forming the sealing part 20 conforms in shape to the interior side of the container side wall 6 except for a section 21 (Figs. 5,6) located on the same side as the inclined section 17 of the upper section. This section 21 is separated from the interior surface of the container side wall 6 in at least the second position in order to allow air to pass. This ventilation results in liquid flowing relatively smoothly when poured from the container 1. Depending on the flexibility of the container side wall 6 and the sealing part 20, the section 21 may be effective to seal against the interior surface of the container side wall 6 in the first position, so that a seal is provide along the entire length of the sealing part 20 at a level between the base 4 and the end of the spout 7 closest to the base 4.

In the second position, at least a section of the sealing part 20 on an opposite side to the inclined section 17 of the edge section 11 is situated at a level between the rim 5 and the end of the spout 7 closest to the base 4, allowing liquid to be poured from the container. In view of the fact that the container side wall 6 is inclined outwards towards the rim 5, the sealing part 20 would be spaced apart from the interior surface of the container side wall 6 even in the absence of the spout 7.

In the illustrated embodiment, the sealing part 20 also co-operates with first and second ridges 22a,b,23 (Figs. 3,4) provided on an interior surface of the container side wall 6. First ridges 22a,b (Fig. 3) are provided adjacent the spout 7 at a level corresponding to an end of the spout 7 closest to the base 4. The first ridges 22a,b are arranged symmetrically with respect to the spout 7 such that they are also arranged symmetrically with respect to an upright plane of symmetry of the container 1. The sealing part 20 snaps behind the first ridges 22a,b, when the separating part 2 pivots into the first position. This provides a signal to the user that the container 1 has been closed correctly. The signal need not be audible, but will be felt by the user.

The second ridge 23 (Fig. 4) is located on an opposite side of the interior of the container 1 to the spout 7. The sealing part 20 snaps behind the second ridge 23 when the separating part 2 is moved into the second position. This is a noticeable signal that liquid can be poured from the container 1.

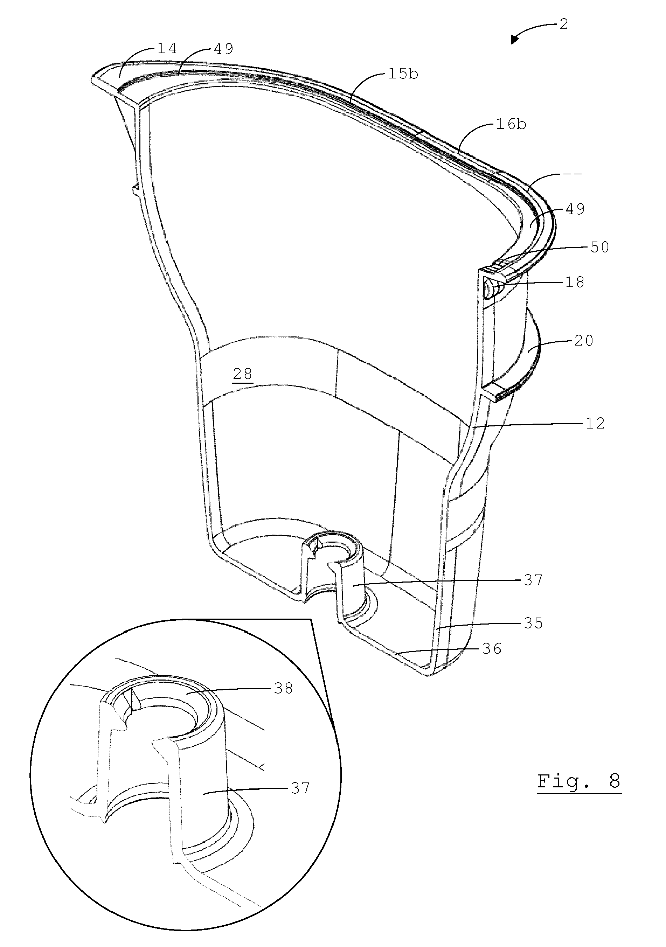

The separating part 2 defines a cartridge seat (Fig. 8) and includes an end section forming a cartridge seat chamber for receiving a liquid treatment device in the form of a replaceable liquid treatment cartridge 24 (Fig. 9). The cartridge seat includes a mouth formed at the bottom of a section of the separating part 2 for forming a reservoir of liquid to be treated. A housing of the cartridge 24 includes a vessel-shaped part 25 joined to a cap-shaped part 26, which together define a chamber for holding a liquid treatment medium. A circumferential cartridge sealing rim 27 has an outer contour conforming to the perimeter of the mouth of the cartridge seat and is arranged to co-operate with a sealing surface 28 when the cartridge 24 is correctly placed in the cartridge seat. When in sealing engagement with a co-operating sealing surface, the cartridge sealing rim 27 separates liquid-permeable windows 29a-d forming liquid inlets from liquid-permeable windows 30a,b forming liquid outlets. Thus, liquid is forced to leave the reservoir through the cartridge 24. It enters through the liquid-permeable windows 29a-d, which in this example are formed in the cap-shaped part 26. The liquid exits through the liquid-permeable windows 30a,b, in this case formed in an end wall 31 forming a base of the cartridge 24. On its way through the cartridge 24, the liquid contacts the liquid treatment medium arranged in the chamber formed by the cap-shaped part 26 and the vessel-shaped part 25.

The liquid treatment medium may include liquid treatment media for the treatment of liquid in a diffusive process, e.g. media removing or adding components to the liquid. In particular, the media may include a liquid treatment medium for the treatment of liquid by sorption, which for present purposes includes ion exchange, adsorption and absorption. The media may include activated carbon. They may include an ion exchange resin, e.g. a cation exchange resin. The cation exchange resin may include cation exchange resin in the hydrogen form. In a particular embodiment, a majority of the ion exchange resin is in the hydrogen form. A minority may, at least initially, be loaded with alkali metal counter ions such as potassium or sodium. For more effective use of the available volume, the cation exchange resin may be weakly acidic cation exchange resin. The liquid treatment medium will generally be at least partly in granular form. The cartridge 24 may include thermally bonded liquid treatment medium, e.g. thermally bonded granular liquid treatment medium. Suitable binders include polyethylene, in particular ultra-high density polyethylene.

The cartridge end wall 31 includes a recess 32 (seen from the outside), in which a hollow cartridge protrusion 33 is arranged. The cartridge protrusion 33 protrudes from a wall section at an end of the recess 32 opposite a mouth of the recess 32. It is completely contained within the recess 32. The cartridge protrusion 33 has a mainly cylindrical shape, but is provided with a bead 34 forming fixing means on an exterior surface. It is also interrupted at its free end to allow it to be compressed slightly.

The cartridge seat chamber (Fig. 8) is formed by a cartridge seat chamber side wall 35 and a cartridge seat chamber end wall 36. Both are integral parts of the separating part 2. A liquid outlet extends through the cartridge seat chamber end wall 36. In the illustrated embodiment, it is defined by a hollow part 37 protruding into the cartridge seat chamber with respect to a surrounding section of the cartridge seat chamber end wall 36. The hollow protruding part 37 is integral to the cartridge seat chamber end wall 36 in this embodiment.

The hollow protruding part 37 is open at a free end in order to receive the cartridge protrusion 33 when the cartridge 24 is placed in the cartridge seat. The hollow protruding part 37 defines a channel and is provided with a ridge 38 protruding into the channel about a central opening that it surrounds. The ends of the ridge are spaced apart in tangential direction with respect to the separating part axis 13, which is aligned with the direction of flow in this example. The separation allows liquid to pass between the ends of the ridge 38 even when the protrusion 33 of the cartridge 24 occupies the central opening surrounded by the ridge 38.

The bead 34 snaps behind the ridge 38 to hold the cartridge 24 in place axially and counter the force acting on the sealing rim 27 of the cartridge 24 when the latter is in place.

Above the cartridge seat, in use, is the reservoir of liquid to be treated, which is closable by the lid 3. The lid 3 co-operates only with the separating part 2. The lid 3 closes only the reservoir, so that the lid 3 can pivot with the separating part 2. The lid 3 will close the reservoir formed by the separating part 2 relatively tightly. This will generally prevent liquid from sloshing over the edge section 11 when the separating part 2 is pivoted or liquid is poured from the container 1 whilst there is still untreated liquid in the reservoir. However, as a further precaution against overfilling of the reservoir, the separating part 2 is made of translucent material and fill indicators (one indicating a level corresponding to one glass, the other a level corresponding to two glasses) are embossed or otherwise provided on the side wall 12 of the separating part 2 where it forms the reservoir (cf. Figs. 1, 5 and 7).

The lid 3 (Figs. 10-16) is a composite part, obtainable e.g. by injection-moulding. It comprises a basic frame 39 forming a substrate, which defines the overall shape of the lid 3. The basic frame may be a thermoplastic part, for example made of polypropylene. It is relatively rigid. The basic frame 39 may be an injection-moulded part. The basic frame 39 is covered by a layer 40 of relatively elastic material. This layer may be applied by overmoulding. The material is more elastic than that of the basic frame 39. It may be made of an elastomer. Suitable materials include natural rubbers, TPE (including TPE-s, TPE-o, TPE-v, TPU, thermoplastic copolyester and thermoplastic polyamides) and silicone rubber. In the illustrated embodiment, silicone rubber is used. The material in the relatively elastic layer 40 adheres to the frame 39 in the mould. The material is relatively soft, having a Shore A hardness (determinable according to DIN 53505) in the range of 25-60, e.g. in the range of 40-50. One suitable variant is ELASTOSIL LR 3071, available from Wacker Chemie AG, Munich, Germany.

The lid 3 includes a cover section 41 and a depending section 42. Both comprise corresponding sections of the basic frame 39. The elastic layer 40 covers the cover section 41 on the exposed side (facing away from the liquid reservoir in the separating part 2 in use) and the depending section 42 on the outside to form an exterior surface of the depending section 42. It further extends past an edge of the frame 39 to form an edge at a free end of the depending section 42 distal to the cover section 41

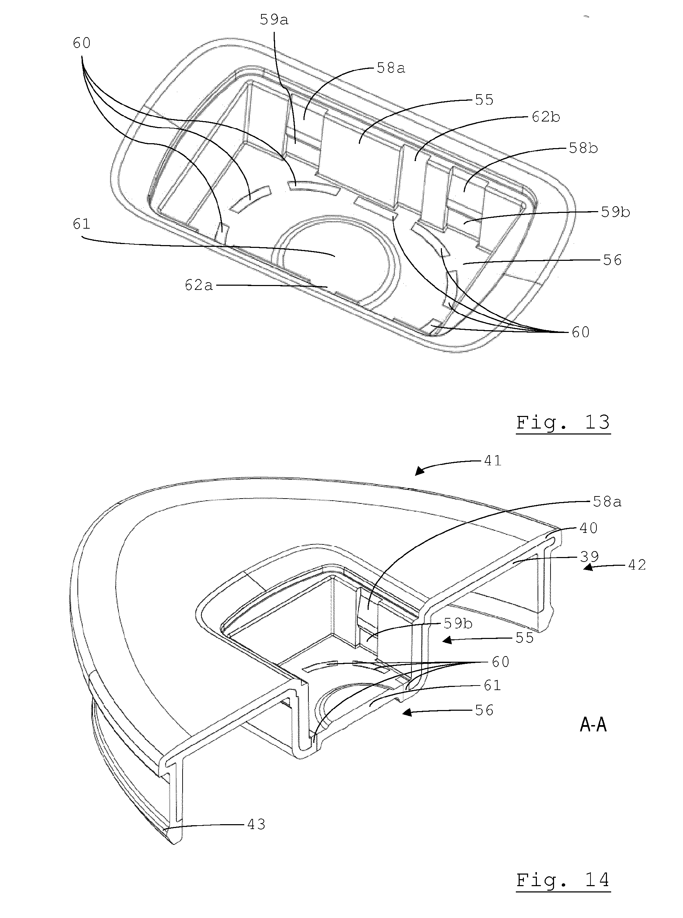

The depending section 42 has an outer contour conforming to an inner contour of the side wall 12 of the separating part 2 at the mouth of the reservoir, except that it is further provided with a circumferential sealing ridge 43 (Fig. 14) completely comprised in the layer 40 of elastic material. This sealing ridge 43 is flattened when compressed between the frame 39 and the side wall 12 of the separating part 2 at the mouth of the reservoir.

The circumferential sealing ridge 43 is interrupted at at least one, in the example only one, location along its circumference. The interruption is in the form of a groove 44 in the layer 40 of elastic material that extends towards an edge of the depending section 42 distal to the cover section 41. This groove 44 allows air to enter the reservoir to replace liquid that flows out through the liquid treatment cartridge 24.

Seen from above, the cover section 41 has an elongated shape, like the reservoir aperture and the mouth of the container 1. The cover section 41 forms an overhang with respect to the depending section 42. A lip 45 extends even further, namely past an outer edge of the edge section 11 of the separating part 2. The lid 3 can thus be removed relatively easily. In the illustrated embodiment, the lip 45 is at a location offset with respect to the plane of symmetry of the container 1, when the lid 3 is in place. In alternative embodiments, the lid 3 may be symmetrical or the lip 45 may be offset to the other side.

It is noted that the cover section 41 conforms to the edge section 11 of the separating part 2. Thus, it includes a first, generally planar, cover section 46, a curved transition section 47 and a section 48 inclined with respect to the first section 46.

Furthermore, an overhanging section of the cover section 41 is received in a recessed part 49 (Figs. 5,8) of an edge section of the separating part 2. This recessed part 49 has an outer perimeter that is asymmetrically shaped, on account of the fact that it must also accommodate the lip 45 where it extends over the edge section of the separating part 2 (cf. Fig. 5).

A ventilation groove 50 (Figs. 5,8), extending also along an interior surface of the separating part 2 where this interior surface engages the depending section 42 is provided at a bottom of the recessed part 49. The groove 44 in the depending section 42 lies opposite and forms a continuation of this ventilation groove 50, so that liquid treated by the cartridge 24 is replaced by air.

On the side of the separating part 2 closest to the spout 7, i.e. one longitudinal end of the cover section 41, the recessed part extends further outwards than along a remainder of the circumference of the separating part 2, except possibly where the recessed part extends all the way to the edge to accommodate the lip. The laterally overhanging section of the cover section 41 protrudes further with respect to the depending section 42 than along a remainder of the circumference of the lid 3, excluding where it extends beyond an outer edge of the edge section of the separating part 2, i.e. the lip 45. Thus, when the lid 3 is peeled off the separating part 2 by grabbing hold of the lip 45, the fulcrum point is relatively far away from the edge of the mouth of the reservoir in the separating part 2. The lid 3 is thus unlikely to drop into the reservoir. It is easy to remove.

The lid 3 is provided with a seat for receiving a removable module 51. In the illustrated embodiment, the module 51 includes a housing containing electronic components that form a lifetime indicator for providing information pertinent to replacement of the liquid treatment cartridge 24. The module 51 includes a user interface including a display screen 52 and a button 53 in, respectively on, a top surface of the module 5452. The display screen 52 may be part of a Liquid Crystal Display device or an Organic Light-Emitting Diode display device, for example. The module 51 houses a battery (not shown) and a battery-powered timer circuit (not shown). It is arranged to display at least one of the time elapsed and the time remaining until replacement of the liquid treatment cartridge 24 is due. This may be an absolute time interval or a relative time interval (i.e. a percentage of the operating lifetime of the cartridge 24). The button 53 is for re-setting the timer on replacement of the cartridge 24. The module 51, and in particular the button 53, are generally of the type described more fully in US 6,224,751 and US 6,074,552, the contents of which are hereby incorporated by reference.

Although the housing of the module 51 will generally be water-tight, it is nevertheless configured to be removable to allow the lid 3 to be cleaned, e.g. in a dishwasher. This also allows the module 51 to be replaced, should it break down or its battery be spent, without the need to replace the entire lid 3.

The seat for the module 51 includes a chamber. In the illustrated embodiment, it is generally rectangular in shape, seen looking into the chamber. It is defined by a side wall 55 and a bottom wall 56. The chamber has a mouth forming an aperture on a side of the lid 3 on which the elastic layer 40 is provided, i.e. the opposite side to the side exposed to the reservoir contents. The chamber is closed except for the mouth, so that no liquid can pass through the chamber walls.

The module 51 is provided with latching protrusions 57a-d on two opposite sides, which are arranged to co-operate with edges of protrusions 58a-d defined in grooves 59a-d in the chamber side wall 55, the edges being the edges proximal to the chamber bottom wall 56. The latching protrusions 57a-d,58a-d thus form a shape-lock to prevent movement of the module 51 out of the seat. The latching protrusions 57a-d on the module 51 are provided with inclined surfaces facing partly in a direction of insertion of the module 51, i.e. away from the direction in which the display screen 52 faces. The protrusions 58a-d are likewise provided with inclined surfaces, facing partly out of the chamber. The inclined surfaces facilitate insertion of the module 51 into the seat. The opposite surfaces of the latching protrusions 57a-d are generally transverse to the direction of insertion, i.e. essentially parallel to the top surface 54 of the module 51.

The module 51 has a height corresponding essentially to a depth of the chamber for receiving it. Thus, when inserted, the top surface 54 is essentially flush with an edge of an aperture in the lid 3. In the illustrated example, the aperture edge is slightly set back with respect to a majority of the surface of the lid 3. The edge of the aperture borders an edge of the top surface 54 of the module 51 along its entire circumference when the module 51 is in place. The elastic nature of the layer 40 ensures that there are no gaps.

The elastic nature also allows the lock between the module 51 and the chamber side wall 55 to be broken, when the module 51 is pressed out of the seat provided for it in the lid 3. To this end, the basic frame 39 is interrupted where it forms the chamber bottom wall 56. Only a deformable section 61 of the layer 40 of relatively elastic material extends across this aperture in the frame 39. The layer 40 continues across a surrounding section of the frame 39 included in the chamber bottom wall 56 and between protrusions 60 (Figs. 13 and 14) that are integral to the frame 39 and formed at the edge of the aperture therein. This helps prevent the layer 40 from separating from the substrate formed by the frame 39.

The chamber side wall 55 is provided with orientation grooves 62a,d on opposite sides of the chamber. A side wall of the module 51 is provided with pairs of tongues 63a-d on opposite sides of the module 51, which are receivable in the orientation grooves 62a,d when the module 51 is inserted into the seat. Because the pairs of tongues 63a-d are located excentrically, the perimeter of the module 51, which is symmetric with respect to a longitudinal plane through its centre, is asymmetric with respect to a plane through its centre and perpendicular thereto. This ensures that the module 51 can only be inserted with one particular orientation, so that the display screen 52 is viewed correctly.

In an alternative embodiment, the orientation of the module 51 can be chosen by the user. In this embodiment, the chamber side wall may be symmetric with respect to each of two mutually perpendicular planes of symmetry through a centre of the chamber and parallel to a direction of insertion of the module 51. In any case, the module 51 need not be modified to implement such an embodiment. It suffices to place the lateral edges of the orientation grooves 62a,d farther apart. The orientation grooves 62a,d are thus widened enough to accommodate the tongues 63a-d in each of two possible orientations of the module 51.

Regardless of whether the module 51 can be inserted with only one or with either of two orientations, it is just as easy for the user to re-insert the module 51 after the lid 3 has been cleaned as it is to remove the module 51 prior to cleaning.

The invention is not limited to the embodiment described above, which may be varied within the scope of the accompanying claims. For example, although the illustrated liquid treatment system is purely gravity-driven, alternative embodiments may include a device for lowering the pressure in the container 1 or a device for increasing the pressure in the reservoir formed by the separating part 2. The replaceable liquid treatment cartridge 24 having a housing containing granular liquid treatment medium has been described by way of example. A different embodiment may include a fitting for sealingly receiving a replaceable liquid treatment device in the form of a disc of thermally bonded liquid treatment medium, optionally covered at least partially by liquid-pervious sheet material such as a fleece or mesh. The lid 3, although described as being for closing an aperture of a separating part 2 in a gravity-driven liquid treatment system may alternatively be used to close the mouth of the container 1 in such a system, e.g. if provided with a fill opening for filling the reservoir in the separating part.

### List of reference numerals

- 1: - container
- 2: - separating part
- 3: - lid
- 4: - base
- 5: - container rim
- 6: - container side wall
- 7: - spout
- 8a,b: - sections forming indentations
- 9a,b: - guide grooves
- 10a,b: - protrusions
- 11: - edge section of separating part
- 12: - side wall of separating part
- 13: - axis of separating part
- 14: - section covering spout mouth
- 15a,b: - edge sections adjacent spout
- 16a,b: - transition sections
- 17: - inclined section
- 18: - lug
- 19: - web
- 20: - sealing part
- 21: - sealing part section
- 22a,b: - first ridges
- 23: - second ridge
- 24: - cartridge
- 25: - vessel-shaped part
- 26: - cap-shaped part
- 27: - cartridge sealing rim
- 28: - sealing surface
- 29a-d: - liquid-permeable windows forming liquid inlets
- 30a,b: - liquid-permeable windows forming liquid outlets
- 31: - cartridge end wall
- 32: - recess in cartridge end wall
- 33: - protrusion in recess
- 34: - bead
- 35: - cartridge seat chamber side wall
- 36: - cartridge seat chamber end wall
- 37: - hollow protruding part
- 38: - ridge in hollow protruding part
- 39: - lid frame
- 40: - elastic layer of lid
- 41: - cover section of lid
- 42: - depending section of lid
- 43: - sealing ridge on lid
- 44: - groove in elastic layer
- 45: - lip
- 46: - section of cover section proximal to spout
- 47: - curved transition section
- 48: - inclined cover section
- 49: - recessed part of edge section
- 50: - ventilation groove
- 51: - module
- 52: - display screen
- 53: - button
- 54: - top surface of module
- 55: - chamber side wall
- 56: - chamber bottom wall
- 57a-d: - latching protrusions on module
- 58a-c: - chamber wall protrusions
- 59a-b: - grooves in which chamber wall protrusions are provided
- 60: - protrusions on chamber bottom wall
- 61: - deformable section
- 62a,b: - orientation grooves
- 63a-d: - tongues

## Claims

1. Lid for closing an aperture providing access to a liquid reservoir, including a seat for receiving a removable module (51),
the seat including a chamber defined by a bottom wall (56) and a side wall (55) and having a mouth forming an aperture on one side of the lid, **characterised in that**
at least one of the side wall (55) and the bottom wall (56) includes at least a section (61) that is elastically deformable to allow at least a section of the bottom wall (56) to be pressed towards the mouth from an opposite side of the lid to the one on which the aperture is formed.

2. Lid according to claim 1,
wherein the seat, e.g. the side wall (55), is arranged to hold the module (51) in the seat by direct engagement of the module (51).

3. Lid according to claim 2,
wherein the side wall (55) is provided with at least one feature (58a-d) for positive engagement of the module (51).

4. Lid according to any one of the preceding claims,
wherein the elastically deformable section (61) corresponds to the section of the bottom wall (56) to be pressed towards the mouth of the chamber.

5. Lid according to claim 4,
wherein the bottom wall (56) includes a relatively rigid substrate (39) provided with an aperture, and
wherein the elastically deformable section (61) is included in a layer (40) of elastic material extending across the aperture.

6. Lid according to claim 5,
wherein the layer (40) of elastic material extends across a surrounding section of the substrate (39) included in the bottom wall (56).

7. Lid according to claim 5 or 6,
wherein the substrate (39) is provided with at least one protrusion (60) on a side proximal to the chamber, and
wherein the at least one protrusion (60) extends at least into the layer (40) of elastic material, e.g. to a surface thereof bordering the chamber.

8. Lid according to any one of the preceding claims,
wherein the side wall (55) includes at least a layer (40) of a same material as that from which the elastically deformable section (61) is made.

9. Lid according to any one of the preceding claims,
wherein the lid includes a cover section (41) for extending across the aperture providing access to the liquid reservoir past an edge thereof, and
wherein the lid includes a depending section (42) for engaging a device including the liquid reservoir along a circumference of the depending section (42),
wherein the side on which the mouth of the seat forms an aperture is a side of the cover section (41) opposite a side from which the depending section (42) depends.

10. Lid according to claim 9,
wherein the depending section (42) has an exterior surface for engaging an interior surface of the reservoir, and
wherein the cover section (41) forms a lateral overhang with respect to the depending section (42).

11. Lid according to claim 9 or 10,
wherein the depending section (42) includes a relatively rigid substrate (39) covered on at least one side by a layer (40) of relatively elastic material, e.g. a layer (40) of the same material as the material of the elastically deformable section (61).

12. Assembly, including a device (2) including a liquid reservoir and an aperture for providing access to the reservoir, and a lid (3) according to any one of the preceding claims for closing the aperture.

13. Assembly according to claim 12,
including a container (1) for storing and dispensing liquid,
wherein the device (2) including the liquid reservoir is a separating part for a liquid treatment system,
suspendable in the container (1) such as to be supported by the container (1), and
arranged to hold a liquid treatment device (24) for treating liquid passing through an outlet of the reservoir.

14. Assembly according to claim 13,
wherein the container (1) is a container (1) for pouring liquid.

15. Liquid treatment system, including an assembly according to claim 13 or 14 and a liquid treatment device (11).
